Europäisches Patentamt

European Patent Office

Office européen des brevets

(11) Veröffentlichungsnummer: **0 089 544**
A1

(12) **EUROPÄISCHE PATENTANMELDUNG**

(21) Anmeldenummer: 83102233.0

(22) Anmeldetag: 07.03.83

(51) Int. Cl.³: **H 02 J 9/06**
H 02 M 7/48, H 02 H 7/20

(30) Priorität: 18.03.82 DE 3209939

(43) Veröffentlichungstag der Anmeldung:
28.09.83 Patentblatt 83/39

(84) Benannte Vertragsstaaten:
DE FR GB

(71) Anmelder: SIEMENS AKTIENGESELLSCHAFT
Berlin und München Wittelsbacherplatz 2
D-8000 München 2(DE)

(72) Erfinder: Fischer, Dietmar
Im Heuschlag 26
D-8520 Erlangen(DE)

(54) Unterbrechungsfreie Stromversorgung.

(57) Die Erfindung betrifft eine unterbrechungsfreie Stromversorgung mit einem von einem Versorgungsnetz (N) gespeisten Gleichrichter (G), einer Zwischenkreisbatterie (B) und einem Wechselrichter (W), der ein gesichertes Netz (NS) versorgt. Die Stromversorgung für die Steuerung (St) der unterbrechungsfreien Stromversorgung erfolgt im Normalfall aus dem gesicherten Netz über eine Versorgungsschaltung (II). Zur Inbetriebnahme der unterbrechungsfreien Stromversorgung ist eine weitere Versorgungsschaltung (I) vorgesehen, die aus einer an der Zwischenkreisbatterie (B) liegenden Reihenschaltung eines ersten Schalters (S1.1), eines Widerstands (R1) und einer Z-Diode (Z) besteht. Die an der Z-Diode (Z) anstehende Spannung dient als Versorgungsspannung für die Steuerung (St) wobei die Z-Diode (Z) und der Gleichstromausgang der Versorgungsschaltung (II) über Entkopplungsdioden (D) parallel geschaltet sind. Der Schalter (S1.1) wird selbsttätig ausgeschaltet, sobald am gesicherten Netz (NS) eine ausreichende Spannung zur Versorgung der Steuerung (St) ansteht. Damit werden der Widerstand (R1) und die Z-Diode (Z) nur für kurze Zeit belastet.

FIG 2

SIEMENS AKTIENGESELLSCHAFT
Berlin und München

Unser Zeichen
82 P 3 0 7 6 E

**Unterbrechungsfreie Stromversorgung**

Die Erfindung betrifft eine unterbrechungsfreie Stromversorgung mit einem von einem Versorgungsnetz gespeisten Gleichrichter, einer Zwischenkreisbatterie und einem Wechselrichter, der ein gesichertes Netz versorgt, wobei die Steuerung für die unterbrechungsfreie Stromversorgung zumindest für eine gewisse Zeitspanne über eine erste Versorgungsschaltung aus der Zwischenkreisbatterie gespeist wird.

Derartige unterbrechungsfreie Stromversorgungen sind im Handel erhältlich und werden beispielsweise für Rechneranlagen und Vermittlungsstellen eingesetzt, bei denen bereits kurzzeitige Versorgungsspannungseinbrüche zu bleibenden Störungen führen können. Der Wechselrichter, der die gegen Spannungsausfall zu sichernden Anlagen versorgt, wird im Normalbetrieb über den Gleichrichter aus einem Versorgungsnetz gespeist. Wenn jedoch das Versorgungsnetz einen Spannungseinbruch aufweist, so liefert die zwischen Gleichrichter und Wechselrichter geschaltete Zwischenkreisbatterie ohne Zeitverzögerung weiter den Laststrom für den Wechselrichter.

Die unterbrechungsfreie Stromversorgung kann natürlich nur funktionieren, solange ihre Steuerung ebenfalls mit Spannungen versorgt wird. Die Spannungsversorgung erfolgt normalerweise aus dem Wechselrichter, d.h. über das gesicherte Netz. Zum Anlauf der unterbrechungsfreien Stromversorgung, bei dem der Wechselrichter noch keine ausreichende Ausgangsspannung liefert, ist auch eine Umschaltung der Spannungsversorgung auf das Versorgungsnetz möglich.

Sid 2 Bih / 15.03.1982

0089544

Es ist jedoch auch denkbar, daß eine unterbrechungsfreie Stromversorgung bei ausgefallenem Versorgungsnetz angefahren werden muß. Um dies zu ermöglichen, ist bei einer bekannten Anordnung die Steuerung der unterbrechungsfreien Stromversorgung aus der Zwischenkreisbatterie versorgt. Da die Zwischenkreisbatterie jedoch die volle Zwischenkreisspannung, z.B. 220 V aufweist, während für die Steuerung Niederspannungen im Bereich bis 24 V nötig sind, muß für diesen Zweck ein Spannungsumsetzer vorgesehen werden. Als Spannungsumsetzer wird bei bekannten Anlagen ein Gleichstrom/Gleichstrom-Wandler vorgesehen, der mit verhältnismäßig geringer Verlustleistung arbeitet.

Ein derartiger Gleichstrom/Gleichstrom-Wandler ist jedoch verhältnismäßig teuer und die Zuverlässigkeit ist wegen des komplexen Aufbaus begrenzt.

Aufgabe der Erfindung ist es daher, für die Zeit,in der weder das Versorgungsnetz noch eine Wechselrichter-Ausgangsspannung zur Verfügung steht,eine einfache Möglichkeit zur Versorgung der Steuerung der unterbrechungsfreien Stromversorgung zu finden.

Diese Aufgabe wird erfindungsgemäß dadurch gelöst, daß die erste Versorgungsschaltung aus einer an der Zwischenkreisbatterie liegenden Reihenschaltung eines ersten Schalters, eines Widerstands und einer Z-Diode besteht, daß eine zweite Versorgungsschaltung vorhanden ist, die aus einem vom Wechselrichter gespeisten Gleichrichter besteht, daß die Z-Diode der ersten Versorgungsschaltung und der Gleichstromausgang der zweiten Versorgungsschaltung über eine Entkopplungsdiode parallel geschaltet und über ein Glättungsfilter mit den Versorgungsspannungsklemmen der Steuerung verbunden sind und daß der Schalter selbsttätig ausgeschaltet wird, sobald der Wechselrichter eine ausreichende Spannung für die zweite Versorgungsschaltung liefert.

0089544

Erfindungsgemäß ist die Versorgungsspannung für die Steuerung also einfach mit der Reihenschaltung eines Widerstands und einer Z-Diode aus der Spannung der Zwischenkreisbatterie erzeugt. Dabei fällt am Widerstand und an der Z-Diode eine verhältnismäßig hohe Verlustleistung ab, die entsprechend der Spannungsreduzierung ein Mehrfaches der in der Größenordnung von 100 Watt liegenden Leistungsaufnahme der Steuerung ausmacht. Die Reihenschaltung bleibt jedoch nur solange an der Zwischenkreisbatterie angeschlossen, bis der Wechselrichter eine ausreichende Spannung für die zweite Versorgungsschaltung liefert. Dann wird die Versorgung der Steuerung durch die zweite Versorgungsschaltung übernommen. Es hat sich gezeigt, daß der Übergang auf die zweite Versorgungsschaltung innerhalb von ca 1 - 2 Sekunden erfolgt, so daß die Reihenschaltung von Widerstand und Z-Diode nur kurze Zeit an die Zwischenkreisbatterie angeschlossen ist. Ferner hat sich herausgestellt, daß in dieser kurzen Zeitspanne die Erwärmung von Widerstand und Z-Diode innerhalb der zulässigen Werte bleibt, wenn diese Bauelemente ausreichend dimensioniert sind. Die Verlustleistung der Schaltung bleibt in Anbetracht der seltenen Inbetriebnahme und der kurzen wirksamen Zeit für die Energiebilanz der unterbrechungsfreien Stromversorgung vernachlässigbar.

Zweckmäßigerweise ist der Schalter ein Schützkontakt, wobei im Steuerkreis des Schützes die Reihenschaltung eines Betätigungskontakts und eines vom Wechselrichter angesteuerten Unterbrechungskontakts liegt. Damit wird auf einfache Weise die Abtrennung der Reihenschaltung von Widerstand und Z-Diode von der Zwischenkreisbatterie erreicht, sobald der Wechselrichter eine ausreichende Ausgangsspannung liefert.

Der Betätigungskontakt kann ein manuell betätigbarer Taster sein. Bei Ausfall des Wechselrichters wird dann die unterbrechungsfreie Stromversorgung durch einen manuellen Befehl wieder gestartet.

In einem Steuerkreis des Schalters kann vorteilhafterweise ein Zeitbegrenzungsglied für dessen Einschaltzeit liegen. Damit wird verhindert, daß z.B. aufgrund eines Defekts im Wechselrichter die Reihenschaltung von Widerstand und Z-Diode zu lange an die Zwischenkreisbatterie angeschlossen bleibt und damit überhitzt wird.

Alternativ oder zusätzlich kann die Z-Diode mit einem Temperaturfühler versehen sein, der den Schalter bei Übertemperatur der Z-Diode öffnet. Damit wird die Z-Diode direkt gegen Überlastung geschützt. Ebenso kann auch der Widerstand mit einem Temperaturfühler versehen sein, der den Schalter bei Übertemperatur des Widerstands öffnet.

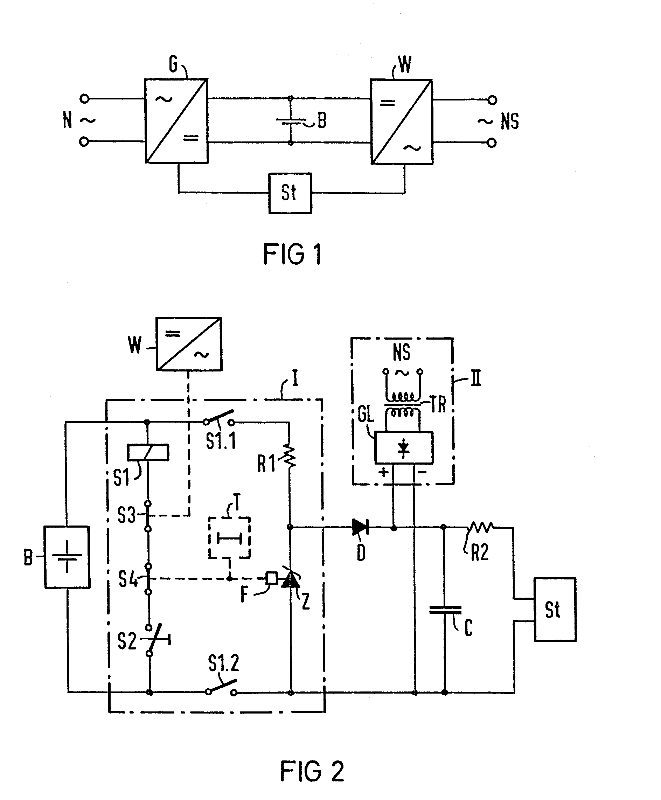

Ein Ausführungsbeispiel der Erfindung wird nachfolgend anhand der Figuren 1 und 2 näher erläutert.

Figur 1 zeigt die Grundschaltung einer unterbrechungsfreien Stromversorgung. Mit einem Versorgungsnetz N ist die Wechselspannungsseite eines Gleichrichters G verbunden, dessen Gleichspannungsseite mit dem Gleichspannungseingang eines nachgeschalteten Wechselrichters W verbunden ist. Zwischen Gleichrichter G und Wechselrichter W ist eine Zwischenkreisbatterie B eingefügt, die die Versorgung des Wechselrichters W übernimmt, wenn das Versorgungsnetz N ausfällt. Die Batterie B wird durch den Gleichrichter G im Normalbetrieb ständig aufgeladen. Am Wechselspannungsausgang W steht also eine gegen Unterbrechungen des Versorgungsnetzes gesicherte Wechselspan-

nung an, mit der ein gesichertes Netz NS gespeist wird. Gleichrichter G und Wechselrichter W werden von einer Steuerung St angesteuert.

Figur 2 zeigt eine Stromversorgung für diese Steuerung St. Im Normalbetrieb erfolgt die Versorgung der Steuerung St über einen Transformator TR und einen nachgeschalteten Gleichrichter aus der Ausgangsspannung des Wechselrichters W, d.h. aus dem gesicherten Netz NS. Da bei der Inbetriebnahme des Wechselrichters dieser noch keine Ausgangsspannung liefert, kann mit einer nicht dargestellten Umschalteinrichtung der Transformator TR zur Inbetriebnahme der unterbrechungsfreien Stromversorgung auch auf das Versorgungsnetz N geschaltet werden. Auf diese Weise ist eine Inbetriebnahme jedoch nur bei intaktem Versorgungsnetz N möglich. Um auch bei ausgefallenem Versorgungsnetz N eine Inbetriebnahme der unterbrechungsfreien Stromversorgung zu ermöglichen, ist eine weitere Versorgungsschaltung I für die Steuerung vorgesehen, die an die Zwischenkreisbatterie B angeschlossen ist. Dabei liegt zwischen den Klemmen der Zwischenkreisbatterie B die Reihenschaltung eines einem Schütz S1 zugeordneten Schließers S1.1, eines Widerstands R1, einer Z-Diode Z und eines zweiten, demselben Schütz S1 zugeordneten Schließers S1.2. Wenn die Kontakte S1.1 und S1.2 also geschlossen sind, so wird die Spannung der Zwischenkreisbatterie B durch den mit dem Widerstand R1 und der Z-Diode Z gegebenen Spannungsteiler auf die Zener-Spannung der Z-Diode Z reduziert. Diese Zener-Spannung wird als Versorgungsspannung für die Steuerung St verwendet. Dazu ist die Z-Diode Z über eine Entkopplungsdiode D dem Ausgang des Gleichrichters G1 parallel geschaltet und mit einem nachgeschalteten Kondensator C geglättet. Über einen Schutzwiderstand R2 wird die Versorgungsspannung dann der Steuerung St zugeführt.

**0089544**

Um die Versorgungsschaltung I in Betrieb zu nehmen, d.h. die Kontakte S1.1 und S1.2 zu schließen, muß die Betätigungsspule des Schützes S1 angesteuert werden. Diese liegt dazu in Reihenschaltung mit zwei Öffnern S3 und S4 sowie einem als Schließer ausgebildeten Taster S2 ebenfalls parallel zur Zwischenkreisbatterie B. Zur Inbetriebnahme der Versorgungsschaltung I wird der Taster S2 gedrückt und damit die Reihenschaltung von Widerstand R1 und Z-Diode Z an die Zwischenkreisbatterie B gelegt.

Es muß jedoch dafür gesorgt werden, daß diese Verbindung nicht unnötig lange bestehen bleibt, da sonst die Z-Diode Z und der Widerstand R1 unnötig aufgeheizt werden. Zu diesem Zweck ist der Öffner S3 vorgesehen, der vom Wechselrichter W angesteuert wird. Sobald der Wechselrichter W eine ausreichende Ausgangsspannung liefert, wird der Öffner S3 geöffnet, so daß das Schütz S1 abfällt und die Reihenschaltung von Widerstand R1 und Z-Diode Z von der Zwischenkreisbatterie B trennt. Die Versorgung der Steuerung erfolgt dann über die Versorgungsschaltung II aus dem gesicherten Netz NS.

Bei intaktem Wechselrichter W ist die Zeit, in der die Versorgungsschaltung I in Betrieb bleibt, ausreichend kurz (ca. 1 - 2 Sekunden),um eine Überhitzung des Widerstands R1 und der Z-Diode Z zu verhindern. Bei defektem Wechselrichter W erfolgt jedoch keine Unterbrechung des Ansteuerkreises für das Schütz S1. Um auch in diesem Fall eine Zerstörung der Versorgungsschaltung I zu verhindern, muß das Bedienungspersonal angewiesen werden, den Taster S2 nur für begrenzte Zeit zu drücken.

Einen automatisch wirkenden Zerstörungsschutz erhält man jedoch, wenn man in Reihe zur Betätigungsspule des Schützes S1 einen weiteren Öffner S4 vorsieht, der entweder von einem Zeitglied T oder von einem mit der Z-Diode Z oder dem Widerstand R1 verbundenen Temperatur-

0089544

fühler F angesteuert wird. Mit dem Zeitglied T erreicht man, daß das Schütz S1 nach einer definierten Zeit ab Betätigung wieder abfällt. Mit dem Temperaturfühler F, der zusammen mit dem Öffner S4 auch als Bimetallschalter ausgebildet sein kann, werden die Z-Dioden bzw. der Widerstand als die am höchsten belasteten Bauteile der Schaltung direkt geschützt.

Mit der beschriebenen Schaltung ist also eine Inbetriebnahme der unterbrechungsfreien Stromversorgung auch dann möglich, wenn sowohl das Versorgungsnetz N als auch das gesicherte Netz NS ausgefallen sind. Lediglich die Zwischenkreisbatterie B muß eine Spannung liefern. Während einer Inbetriebsetzung über die Versorgungsschaltung I fällt zwar eine verhältnismäßig hohe Verlustleistung am Widerstand R1 und an der Z-Diode Z ab. Da aber die Versorgungsschaltung I nur kurze Zeit im Betrieb bleibt, erreicht die Temperatur dieser Bauelemente keine unzulässigen Werte.

2 Figuren
6 Patentansprüche

Patentansprüche

1. Unterbrechungsfreie Stromversorgung mit einem von einem Versorgungsnetz gespeisten Gleichrichter, einer Zwischenkreisbatterie und einem Wechselrichter, der ein gesichertes Netz versorgt, wobei die Steuerung für die unterbrechungsfreie Stromversorgung zumindest für eine gewisse Zeitspanne über eine erste Versorgungsschaltung aus der Zwischenkreisbatterie gespeist wird, d a - d u r c h   g e k e n n z e i c h n e t , daß die erste Versorgungsschaltung (I) aus einer an der Zwischenkreisbatterie (B) liegenden Reihenschaltung eines Schalters (S1.1), eines Widerstands (R1) und einer Z-Diode (Z) besteht, daß eine zweite Versorgungsschaltung (II) vorhanden ist, die aus einem vom Wechselrichter (W) gespeisten Gleichrichter (G1) besteht, daß die Z-Diode (Z) der ersten Versorgungsschaltung (I) und der Gleichstromausgang der zweiten Versorgungsschaltung (II) über eine Entkopplungsdiode (D) parallel geschaltet und über ein Glättungsfilter (C) mit den Versorgungsspannungsklemmen der Steuerung (St) verbunden sind und daß der Schalter (S1.1) selbsttätig ausgeschaltet wird, sobald der Wechselrichter (W) eine ausreichende Spannung für die zweite Versorgungsschaltung (II) liefert.

2. Unterbrechungsfreie Stromversorgung nach Anspruch 1, d a d u r c h   g e k e n n z e i c h n e t ,   daß der Schalter (S1.1) ein Schützkontakt ist, wobei im Steuerkreis des Schützes (S1) die Reihenschaltung eines Betätigungskontaktes (S2) und eines vom Wechselrichter (W) angesteuerten Unterbrechungskontakts (S3) liegt.

3. Unterbrechungsfreie Stromversorgung nach Anspruch 2, d a d u r c h   g e k e n n z e i c h n e t ,   daß der Betätigungskontakt (S2) ein manuell betätigbarer Taster ist.

4. Unterbrechungsfreie Stromversorgung nach einem der Ansprüche 1 bis 3, **d a d u r c h   g e k e n n -  z e i c h n e t ,** daß in einem Steuerkreis des Schalters (S1.1) ein Zeitbegrenzungsglied (T, S4) für dessen Einschaltzeit liegt.

5. Unterbrechungsfreie Stromversorgung nach einem der Ansprüche 1 bis 4, **d a d u r c h   g e k e n n -  z e i c h n e t ,** daß die Z-Diode (Z) mit einem Temperaturfühler (F) versehen ist, der den Schalter (S1.1) bei Übertemperatur der Z-Diode (Z) öffnet.

6. Unterbrechungsfreie Stromversorgung nach einem der Ansprüche 1 bis 5, **d a d u r c h   g e k e n n -  z e i c h n e t ,** daß der Widerstand (R1) mit einem Temperaturfühler (F) versehen ist, der den Schalter (S1.1) bei Übertemperatur des Widerstands (R1) öffnet.

FIG 1

FIG 2

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-1 590 623 (STANDARD ELEKTRIK LORENZ) * Seite 2, Zeilen 16-26; Seite 8, Zeile 1 - Seite 9, Zeile 27; Figuren 1,4 * | 1 | H 02 J   9/06 H 02 M   7/48 H 02 H   7/20 |
| | --- | | |
| Y | DE-A-2 502 752 (ELEKTRO-GERÄTE-BAU GUSTAV KLEIN) * Insgesamt * | 1,4 | |
| | --- | | |
| A | US-A-3 482 146 (J.L. McMORROW et al.) * Spalte 2, Zeilen 15-32, 53-72; Figur 1 * | 2,3,6 | |
| | --- | | |
| A | DE-A-1 413 776 (ACCUMULATORENFABRIK SONNENSCHEIN) * Seite 4, Zeile 7 - Seite 5, Zeile 10; Figur * | 5,6 | RECHERCHIERTE SACHGEBIETE (Int. Cl. 3) |
| | --- | | |
| A | FR-A-2 416 581 (WESTFALISCHE METALL INDUSTRIE KG HUECK & CO.) * Seite 1, Zeilen 1-24; Seite 4, Zeile 19 - Seite 5, Zeile 25; Figur 2 * | 6 | H 02 J   9/00 H 02 M   7/00 G 05 F   3/00 H 02 H   7/00 H 02 H   5/00 |

Der vorliegende Recherchenbericht wurde für alle Patentansprüche erstellt.

| Recherchenort DEN HAAG | Abschlußdatum der Recherche 28-06-1983 | Prüfer POINT A.G.F. |
|---|---|---|